# EUROPÄISCHE PATENTSCHRIFT

(11) **EP 2 607 758 B1**
(45) Veröffentlichungstag und Bekanntmachung des Hinweises auf die Patenterteilung: **11.07.2018**
(21) Anmeldenummer: 12006421.7
(22) Anmeldetag: 13.09.2012
(51) Int. Cl.: F16K 3/24, F16K 11/07, F16K 31/122, B60T 13/58

(54) **Ventilbaueinheit mit Anschlüssen für wenigstens zwei unterschiedliche Druckmedien**
Valve component with connections for at least two different pressure media
Ensemble soupape avec raccordements pour au moins deux fluides de pressurisation différents

(30) Priorität: 23.12.2011 DE 102011122637
(43) Veröffentlichungstag der Anmeldung: 26.06.2013
(73) Patentinhaber: WABCO GmbH, 30453 Hannover (DE)
(72) Erfinder: Binder, Hartmut, 30657 Hannover (DE); Claussen, Heiko, 30455 Hannover (DE); Eickhoff, Jürgen, 29664 Walsrode (DE); Heinrich, Volker, 31171 Nordstemmen (DE); Lülfing, Ralph-Carsten, 30826 Garbsen (DE); Roters, Gerd, 31515 Wunstorf (DE); Wohltmann, Dirk, 30974 Wennigsen (DE)

(56) Entgegenhaltungen:
- GB-A- 1 485 347
- US-A- 5 241 986
- US-A- 6 076 549
- US-A1- 2005 211 941

## Beschreibung

Die Erfindung bezieht sich auf eine Ventilbaueinheit mit den Merkmalen des Oberbegriffs des Patentanspruchs 1. Eine derartige Ventilbaueinheit ist bekannt aus der GB 1 485 347 A.

Mit Druckmedien betriebene Ventilbaueinheiten sind hinlänglich bekannt. In der Regel werden Ventilbaueinheiten nur mit einem Druckmedium betrieben, also entweder pneumatisch mit Druckluft, oder hydraulisch mit einem Hydraulikfluid. Es sind aber auch schon Mischformen beschrieben worden. So beschreibt die DE 29 07 426 C2 eine Kraftfahrzeug-Bremsanlage, bei der pneumatischer Druck ausgesteuert und an pneumatische Bremszylinder geleitet wird. Hierbei wird hydraulischer Druck zur Steuerung des pneumatischen Ventils verwendet. Ebenfalls bekannt sind so genannte "Air over Hydraulic"- Systeme, kurz: AoH, bei denen Druckluft über einen Druckwandler in hydraulischen Druck umgewandelt wird. Ein Beispiel für ein derartiges AoH-System wird in der DE 197 46 030 A1 beschrieben. Nachteilig an diesen Systemen ist der raumgreifend ausgebildete Druckwandler. Dieser muss systembedingt sehr groß ausgebildet sein, da dieser in der Lage sein muss, pneumatischen Druck in der Größenordnung von 8 bis 12 bar in hydraulischen Druck in der Größenordnung von deutlich mehr als 100 bar umzuwandeln. Solche Druckumwandler sind nicht nur sehr aufwändig zu fertigen und daher teuer, sie lassen sich auch nicht in jedes Fahrzeug verbauen, da nicht immer genügend Bauraum hierfür zur Verfügung steht.
Der Erfindung liegt die Aufgabe zugrunde, eine Ventilbaueinheit zu schaffen, mit der sich auf einfache Weise pneumatischer Eingangsdruck in hydraulischen Ausgangdruck umwandeln lässt.

Der Erfindung liegt die Erkenntnis zugrunde, dass sich die gestellte Aufgabe auf überraschend einfache Art und Weise mit einer Ventilbaueinheit lösen lässt, welche die Merkmale des Patentanspruchs 1 aufweist.
Durch diesen Aufbau wird zum einen erreicht, dass der im Verhältnis zum hydraulischen Druck geringe pneumatische Druck ohne komplizierte und bauliche Maßnahmen als solcher nutzbar ist, ohne dass eine Druckumwandlung auf ein sehr viel höheres Druckniveau nötig wäre. Der pneumatische Druck wird als reiner Steuerdruck genutzt, indem ein simpel aufgebauter Steuerkolben mit dem pneumatischen Druck beaufschlagt wird. Dieser Steuerkolben dient ausschließlich dazu, das Ventil des hydraulischen Teils der Ventilbaueinheit zu betätigen.
Außerdem kann vorgesehen sein, dass der auf den Steuerkolben des pneumatischen Teils wirkende Steuerdruck zwischen 8,5 und 12,5, vorzugsweise 10 bar beträgt und dass der am hydraulischen Eingang des hydraulischen Teils anliegende hydraulische Druck zwischen 85 und 125 bar, vorzugsweise 100 bar beträgt, wobei die Druckübersetzung ein Verhältnis von 10 : 1 aufweist. Erfindungsgemäß ist vorgesehen, dass der Steuerkolben den auf ihn wirkenden Druck über einen Stößel auf einen ersten Federteller überträgt, wobei der erste Federteller in einer axialen Zylinderbohrung der Gehäusehälfte des hydraulischen Teils der Ventilbaueinheit angeordnet ist, wobei sich der erste Federteller mit einem Rand gegen ein zum pneumatischen Teil gewandtes Ende einer Schraubendruckfeder abstützt, wobei sich ein zu den hydraulischen Anschlüssen hin gewandtes Ende der Schraubendruckfeder gegen einen Rand eines zweiten Federtellers abstützt, welcher an dem Schieber anliegt.
Eine andere Ausgestaltung der Erfindung sieht vor, dass der Schieber längsverschieblich in einer zylindrischen Bohrung in der Gehäusehälfte des hydraulischen Teils angeordnet ist, wobei der Durchmesser der Bohrung durchmesserkleiner als die Zylinderbohrungen der Gehäusehälften ist.

Ebenso liegt es im Rahmen der Erfindung vorzusehen, dass das Verhältnis des Durchmessers des Schiebers zum Durchmesser des Steuerkolbens etwa 1:3 beträgt.

In einer besonders bevorzugten Weiterbildung der Erfindung ist vorgesehen, dass die Ventilbaueinheit Teil einer Bremsanlage eines Kraftfahrzeuges, insbesondere einer landwirtschaftlichen Zugmaschine, ist, wobei die Bremsanlage nehmerseitig hydraulisch und steuerseitig pneumatisch ausgebildet ist.

In einer besonders praktischen Weiterbildung der Erfindung ist vorgesehen, dass Räder des Fahrzeugs jeweils Bremsen aufweisen, welche durch jeweils einen hydraulischen Bremszylinder betätigbar sind, wobei die Bremszylinder an wenigstens einem Hydraulikspeicher angeschlossen sind, wobei zwischen dem wenigstens einen Hydraulikspeicher und den hydraulischen Bremszylindern jeweils eine Ventilbaueinheit angeordnet ist.

Besonders vorteilhaft ist ebenso eine Ausgestaltung der Erfindung, die sich dadurch auszeichnet, dass die Bremsanlage steuerseitig wenigstens einen Druckluftbehälter aufweist, aus welchen Druckluft jeweils in den Druckluftanschluss der Ventilbaueinheit einspeisbar ist, wobei zwischen dem wenigstens einen Druckluftbehälter und jeweils einer Ventilbaueinheit ein Bremswertgeber in Form eines Fußbremsventils angeordnet ist.

In einer besonders praktischen Weiterbildung der Erfindung ist vorgesehen, dass die Bremsanlage steuerseitig Komponenten einer pneumatischen ABS-Bremsanlage, insbesondere pneumatische ABS-Ventile, aufweist, welche zwischen Bremswertgeber und jeweils einer Ventilbaueinheit angeordnet sind.

Diese Ausgestaltung lässt sich dadurch ergänzen, dass die ABS-Bremsanlage elektronisch durch ein elektronisches Steuergerät gesteuert ist, wobei wenigstens elektrische Drehzahlsensoren zur Erfassung von Drehzahlen der Räder an diesen angeordnet und elektrisch mit dem Steuergerät verbunden sind.

Hierbei kann gemäß einer praktischen Ergänzung vorgesehen sein, dass zwischen dem wenigstens einen Druckluftbehälter und wenigstens einem ABS-Ventil ein durch das Steuergerät elektronisch gesteuertes 3/2-Wegeventil angeordnet ist.

Diese Ausgestaltung lässt sich auch noch dadurch ergänzen, dass das 3/2-Wegeventil eine autonome Lenkbremsfunktion ermöglicht.

Besonders vorteilhaft ist schließlich eine Ausgestaltung der Erfindung, die sich dadurch auszeichnet, dass das 3/2-Wegeventil bei Vorliegen eines vom elektronischen Steuergeräts erkannten Lenkbremswunsch aufgrund von durch die Drehzahlsensoren und durch einen Lenkradwinkelsensor gewonnenen Daten über Fahrzeuggeschwindigkeit und Lenkradeinschlag derart schaltbar ist, dass ein achsweises, einseitiges Bremsen von Rädern erfolgt oder unterdrückt ist.

Die Erfindung wird im Folgenden anhand der beiliegenden Zeichnung näher erläutert. Darin zeigt
- Fig. 1: ein Ausführungsbeispiel einer Ventilbaueinheit gemäß der Erfindung in Längsschnitt,
- Fig. 2: die Ventilbaueinheit aus Fig. 1 in um 90° gedrehter Schnittansicht, und
- Fig. 3: ein schematischer Schaltplan einer Bremsanlage unter Verwendung der erfindungsgemäßen Ventilbaueinheit.

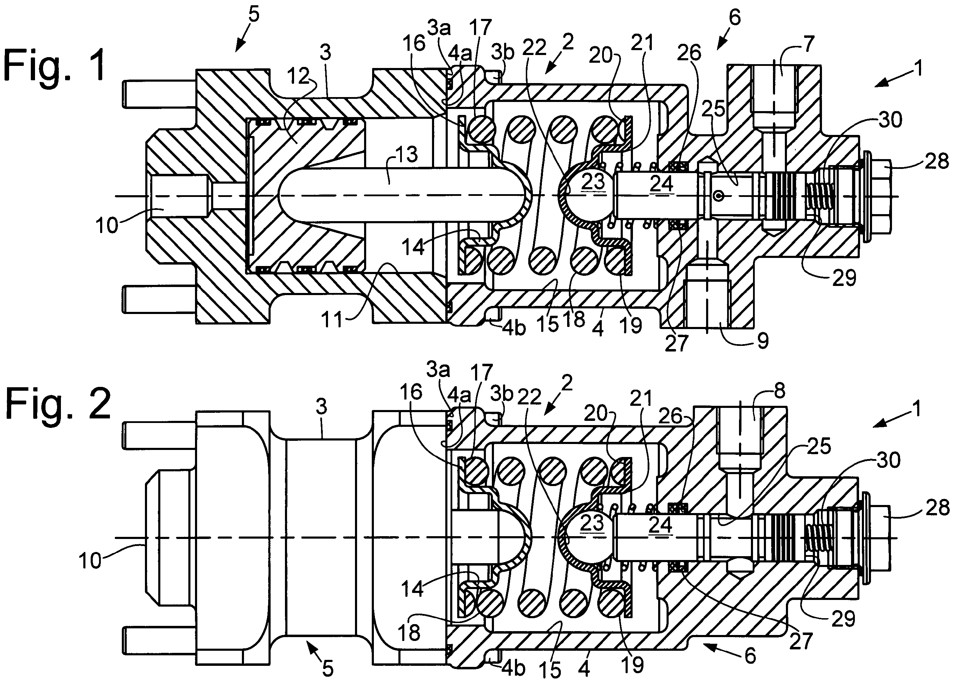

Demnach zeigt Fig. 1 und Fig. 2 ein Ausführungsbeispiel einer erfindungsgemäßen Ventilbaueinheit 1, in Fig. 1 in Längsschnitt und in Fig. 2 in Teillängsschnitt in gegenüber Fig. 1 um 90° gedrehter Ansicht. Die Ventilbaueinheit 1 weist ein mittig geteiltes Ventilgehäuse 2 mit zwei Gehäusehälften 3, 4 auf, welche die Ventilbaueinheit 1 in einen pneumatischen Teil 5 und in einem hydraulischen Teil 6 unterteilen. Die Gehäusehälften 3, 4 liegen mit Stirnkanten 3a, 4a aneinander an und sind mit Schraubbolzen 3b, 4b miteinander verbunden.

Der hydraulische Teil 6 der Ventilbaueinheit 1 weist insgesamt drei Anschlüsse für Hydraulikflüssigkeit als Arbeitsmedium auf, nämlich einen hydraulischen Eingang 7, einen hydraulischen Ausgang 8 und einen hydraulischen Rücklauf 9, wobei Eingang 7 und Rücklauf 9 nur in Fig. 1 und der Ausgang 8 nur in Fig. 2 erkennbar sind, da Eingang 7 und Rücklauf 9 um 90° versetzt zum Rücklauf 8 am hydraulischen Teil 6 angeordnet sind. Die Anschlüsse 7 - 9 sind über nicht dargestellte Hydraulikleitungen mit einem oder mehreren nicht dargestellten Speichern von Hydraulikflüssigkeit verbunden. Der hydraulische Teil bildet das eigentliche Ventil für einzuspeisendes Hydraulikfluid bzw. stellt eine Arbeitskammer für die Hydraulikflüssigkeit dar.

Der pneumatische Teil 5 der Ventilbaueinheit 1 weist einen pneumatischen Druckluftanschluss 10 zum Einspeisen von Druckluft in den pneumatischen Teil 5 auf. Der Druckluftanschluss 10 ist über eine nicht dargestellte Druckluftleitung mit einer nicht dargestellten Luftdruckquelle verbunden. Der pneumatische Teil 5 stellt die Steuer- oder Schaltkammer dar, mit dem das Ventil des hydraulischen Teils 6 betätigt, also geschaltet wird. Entsprechend stellt der hydraulische Teil 6 die Arbeitskammer dar.
Die Funktionsweise der Ventilbaueinheit 1 ist folgende: sobald Bedarf besteht, einen mit dem hydraulischen Ausgang 8 verbundenen, nicht dargestellten Drucknehmer, beispielsweise einen Bremszylinder, mit hydraulischem Druck zu beaufschlagen, wird als Steuerdruck dienende Druckluft über den Druckluftanschluss 10 in den pneumatischen Teil 5 der Ventilbaueinheit 1 eingespeist. Die Druckluft beaufschlagt mit einem Druck von etwa 10 bar einen in einer axialen Zylinderbohrung 11 angeordneten Steuerkolben 12. Dieser überträgt den auf ihn wirkenden Druck über einen Stößel 13 auf einen ersten Federteller 14, wobei der erste Federteller 14 und die nachfolgend genannten Komponenten in einer axialen Zylinderbohrung 15 der Gehäusehälfte 4 des hydraulischen Teils 6 der Ventilbaueinheit 1 angeordnet ist.

Der erste Federteller 14 stützt sich mit einem Rand 16 gegen ein zum pneumatischen Teil 5 gewandtes Ende 17 einer Schraubendruckfeder 18 ab. Ein zu den hydraulischen Anschlüssen 7 - 9 hin gewandtes Ende 19 der Schraubendruckfeder 18 stützt sich gegen einen Rand 20 eines zweiten Federtellers 21 ab. Der zweite Federteller 21 ist gegenüber dem ersten Federteller 14 spiegelbildlich angeordnet und weist einen halbkugelförmigen Tellerboden 22 auf, in dem eine Kugel 23 angeordnet ist, welche an einem federbelasteten Schieber 24 anliegt bzw. mit diesem verbunden ist. Der Schieber 24, der das eigentliche Ventil darstellt, ist längsverschieblich in einer zylindrischen Bohrung 25 angeordnet, wobei der Durchmesser der Bohrung 25 durchmesserkleiner ist als die Zylinderbohrungen 11 und 15 der Gehäusehälften 3, 4. Entsprechend ist der Durchmesser des Schiebers 24 geringer als der Durchmesser des Steuerkolbens 12. Im dargestellten Ausführungsbeispiel beträgt das Verhältnis des Durchmessers des Schiebers 24 zum Durchmesser des Steuerkolbens 12 etwa 1:3. Eine in einer Ausnehmung 26 angeordnete Dichtung 27 trägt dafür Sorge, dass keine Hydraulikflüssigkeit aus dem hydraulischen Teil 6 in den pneumatischen Teil 5 austreten kann. Ebenfalls wird durch die Dichtung 27 gewährleistet, dass keine Druckluft aus dem pneumatischen Teil 5 in den hydraulischen Teil 6 dringen kann.
Der Schieber 24 ist in an sich bekannter Weise so ausgebildet, dass er - je nach axialer Stellung - die hydraulischen Anschlüsse 7 - 9 voneinander trennt oder miteinander verbindet. Insofern bildet der Schieber 24 ein 2-Wegeventil, schaltet den hydraulischen Teil 6 also entweder auf oder zu, wobei das durch den Schieber 24 gebildete Ventil normalerweise geschlossen ist. Stirnseitig ist in die zylindrischen Bohrung 25 der Gehäusehälfte 4 des hydraulischen Teils 6 eine Schraube 28 eingeschraubt. Zwischen der Schraube 28 und einer Stirnfläche 29 des Schiebers 24 ist eine Druckfeder 30 angeordnet. Durch entsprechende Verdrehung der Schraube 28 lässt sich die Federkraft der Druckfeder 30 und damit die auf den Schieber 24 wirkende Vorspannung einstellen.

Wird nun bei Bedarf einen Steuerdruck ausübende Druckluft in die Ventilbaueinheit 1 eingespeist, verschiebt sich der Schieber 24 in Richtung auf die Schraube 28, was zu einem Verbinden der hydraulischen Anschlüsse 7 - 9 führt. Solange pneumatischer Steuerdruck mit etwa 8, 5 bis 12, 5 bar, vorzugsweise mit 10 bar auf den Schieber 24 wirkt, bleiben die Anschlüsse 7 - 9 geöffnet und Hydraulikflüssigkeit kann mit einem Druck von etwa 85 bis 125 bar, vorzugsweise mit 100 bar vom Eingang 7 zum Ausgang 8 strömen, wodurch der hydraulische Nehmer mit hydraulischem Druck beaufschlagt wird. Die Druckübersetzung weist hierbei also ein Verhältnis von 10 : 1 auf.

Die relevanten Einzelteile weisen beim Ausführungsbeispiel folgende Maße auf: Durchmesser des Steuerkolbens 12: 46,1mm, Kolbenhub des Steuerkolbens 12: zwischen 9, 5 und 15 mm, pneumatische Volumenaufnahme zwischen 15,9 und 25,1 ccm.

Der zuvor geschilderte Aufbau der Ventilbaugruppe 1 ermöglicht eine besonders kompakt und leicht aufgebaute Ventilbaueinheit 1, welche gegenüber bislang bekannten "Air over Hydraulic"- Druckumsetzern besondere Vorteile bietet.

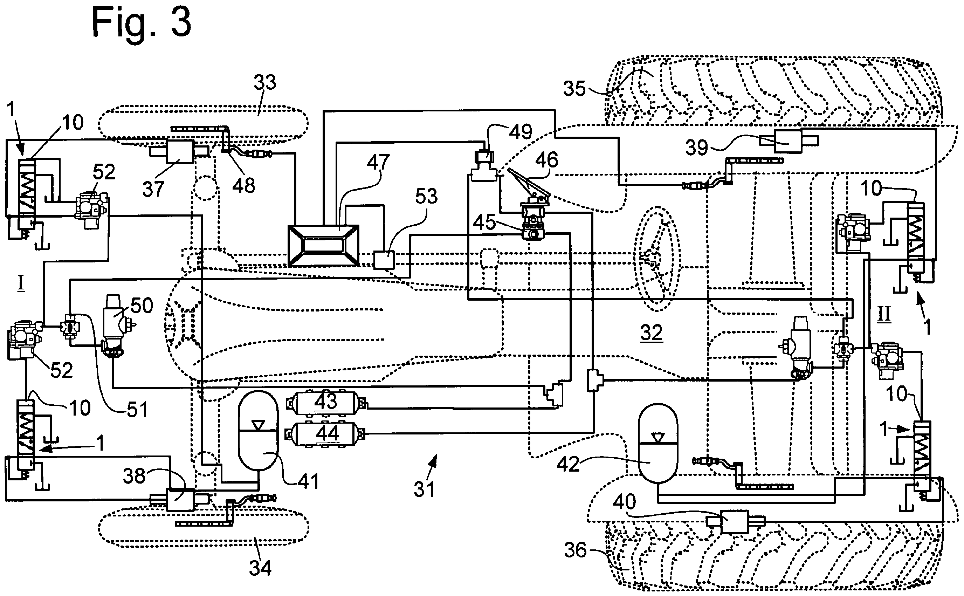

Eine besonders bevorzugte Einsatzmöglichkeit der Ventilbaueinheit 1 ist in Fig. 3 dargestellt. Diese zeigt in schematischer Aufsicht einen Bremsschaltplan einer Bremsanlage 31 eines in Punktlinien angedeuteten Kraftfahrzeuges in Form einer landwirtschaftlichen Zugmaschine 32. Grundsätzlich lässt sich die im Nachfolgenden näher beschriebene Bremsanlage 31 aber auch für andere Arten von Kraftfahrzeugen einsetzen, beispielsweise mittelschwere Lastkraftwagen, Baumaschinen, forstwirtschaftlich genutzte Knickschlepper oder für Radlader.

Die Zugmaschine weist lenkbare Vorderräder 33, 34 und starre Hinterräder 35, 36 auf. Vorderräder 33, 34 und Hinterräder 35, 36 werden im Nachfolgenden zusammenfassend auch als Räder 33 - 36 bezeichnet. Die Räder 33 - 36 sind jeweils mit einer an sich bekannten Bremse ausgerüstet, von welcher jeweils nur schematisch ein Bremszylinder 37 - 40 dargestellt ist. Wie üblich ist die Bremsanlage 31 zweikreisig ausgebildet, wobei die Bremszylinder 37, 38 der Vorderräder 33, 34 an einem ersten Bremskreis I und die Bremszylinder 39, 40 der Hinterräder 35, 36 an einem zweiten Bremskreis II angeschlossen sind. Die jeweils hydraulischen Bremszylinder 37, 38 der Vorderräder 33, 34 sind mit einem Hydraulikspeicher 41 verbunden, wobei es sich bei dem Hydraulikspeicher 41 um einen Hochdruckspeicher handelt, der auf geeignete Weise mit Hochdruck beaufschlagt wird. Entsprechend sind die jeweils hydraulischen Bremszylinder 39, 40 der Hinterräder 35, 36 mit einem Hydraulikspeicher 42 verbunden, wobei es sich bei dem Hydraulikspeicher 42 ebenfalls um einen Hochdruckspeicher handelt, der auf geeignete Weise mit Hochdruck beaufschlagt wird.

Zwischen den Hydraulikspeichern 41, 42 und den Bremszylindern 37 - 40 ist jeweils eine Ventilbaueinheit 1 gemäß den Fig. 1 und 2 angeordnet.

Während die Bremsanlage 31 nehmerseitig also hydraulisch ausgebildet ist, ist sie geber- oder steuerseitig pneumatisch ausgebildet. Entsprechend der zweikreisigen Ausbildung der Bremsanlage verfügt der pneumatische Steuerteil über zwei Druckluftbehälter 43, 44, wobei der Druckluftbehälter 43 dem Bremskreis I und der Druckluftbehälter 44 dem Bremskreis II zugeordnet ist. Die Druckluftbehälter 43, 44 werden in nicht dargestellter, an sich bekannter Weise mit Druckluft befüllt, was in der Regel über eine Kompressoranlage mit zwischengeschalteter Lufttrockneranlage erfolgt. Die Druckluftbehälter 43, 44 sind über nicht im Einzelnen mit Bezugsziffern versehenen Druckluftleitungen an einen Bremswertgeber 45 in Form eines Zweikreis-Fußbremsventil 46 angeschlossen.

Bei Betätigung des Fußbremsventils 46 gelangt Druckluft aus den Druckluftbehältern 43, 44 zum jeweiligen Druckluftanschluss 10 der jeweiligen Ventilbaueinheit 1, was dafür sorgt, dass der in Fig. 3 nicht näher dargestellte Schieber 24 der Ventilbaueinheit 1 verschoben und folglich Hydraulikflüssigkeit in die Bremszylinder 37 - 40 gepumpt wird.

Zur Optimierung der Bremswirkung sind in der Bremsanlage 31 weitere, für sich bekannte Komponenten einer pneumatischen, elektronisch geregelten ABS-Bremsanlage vorgesehen, welche anhand des ersten Bremskreises I der Vorderräder 33, 34 beschrieben wird. Die Komponenten der ABS-Bremsanlage des zweiten Bremskreises II der Hinterräder 35, 36 sind entsprechend auf- bzw. verbaut.

Ein elektronisches Steuergerät 47 ist elektrisch mit Raddrehzahlsensoren 48 jedes der Räder 33 - 36 verbunden, wobei zur Vereinfachung nur der Drehzahlsensor 48 des rechten Vorderrades 33 mit einer Bezugsziffer versehen ist. Das Steuergerät 47 ist elektrisch in nicht dargestellter Weise mit weiteren elektrischen und elektronischen Komponenten verbunden, wie Schalter, dem Akkumulator der Zugmaschine 32, Warn- und Anzeigeleuchten im Armaturenbrett, einer CAN-Bus-Leitung gemäß SAE J1939, und dergleichen. Ebenfalls elektrisch über eine elektrische Leitung ist das Steuergerät 47 mit einem Drucksensor 49 verbunden, welcher Luftdruck bzw. pneumatischen Ausgangs-Steuerdruck in einer Ausgangsdruckleitung des Zweikreis-Fußbremsventils 46 erfasst. Eine - nicht dargestellte - elektrische Steuerleitung besteht zwischen dem Steuergerät 47 und einem 3/2-Wegeventil 50, welches direkt an den Druckluftbehälter 43 angeschlossen ist. Dieses ist über ein Doppelrückschlagventil 51 mit einem ABS-Ventil 52 verbunden, wobei das ABS-Ventil 52 ausgangsseitig schließlich mit dem Druckluftanschluss 1 der Ventilbaueinheit 10 verbunden ist.

Das 3/2-Wegeventil 50 dient optionalen Funktionen, wie dem aktiven Bremseingriff unabhängig vom Fahrerwunsch, ASC (Autonomous Stability Control - autonome Stabilitätskontrolle) und weiteren Funktionen. Das elektronisch gesteuerte 3/2-Wegeventil 50 kann auch in Fortfall kommen. Bevorzugt wird aber die in Fig. 3 dargestellte Ausgestaltung mit dem 3/2-Wegeventil, da sich durch dieses besondere Funktionen ermöglichen lassen. So lässt sich mittels des 3/2-Wegeventils 50 auf besonders einfache Weise eine Lenkbremsfunktion realisieren. Erkennt das Steuergerät 47 aufgrund der Drehzahl der Räder 33 - 36 auf eine geringe Geschwindigkeit, was das Steuergerät 47 auf eine Fahrt abseits befestigter Straßen interpretieren kann, und erkennt das Steuergerät 47 aufgrund eines Lenkradwinkelsensors 53 einen plötzlichen Lenkradeinschlag, erkennt das Steuergerät 47 den Wunsch des Fahrers, bei Ackerfahrt eine scharfe Kurve fahren zu wollen. Daraufhin werden die Räder 33 - 36 einseitig abgebremst, d. h., bei Wunsch des Fahrers, eine enge Linkskurve fahren zu wollen, werden das linke Vorderrad 34 und das linke Hinterrad 36 gebremst, während die kurvenäußeren Räder 33, 35 nicht gebremst werden. Bei Fahrten auf Straßen wird diese Funktion durch das Steuergerät 47 autonom außer Kraft gesetzt, so dass dann ein einseitiges Bremsen ausgeschlossen ist.

Auf die vorgenannte Weise wird auf einfachste Weise eine Lenkbremsfunktion ermöglicht, so dass es dann auch möglich ist, mit nur einem Fußbremshebel bzw. nur einem Fußbremsventil auszukommen, während sonst üblicherweise bei landwirtschaftlich nutzbaren Zugmaschinen zwei Fußbremshebel angeordnet sind, welche bei Fahrten auf normalen Straßen miteinander verbunden werden müssen, damit ein Lenkbremsen bei Straßenfahrt ausgeschlossen ist.

Die insbesondere in Zusammenhang mit den Fig. 1 und 2 beschriebene, pneumatisch gesteuerte bzw. vorgesteuerte Ventilbaueinheit 1 ermöglicht auf einfache Weise die Verwendung vorhandener bzw. bekannter Komponenten zur Erzeugung eines pneumatischen Steuerdrucks und die Aussteuerung eines hydraulischen Drucks. Wird die Ventilbaueinheit bei einer Kraftfahrzeugbremsanlage eingesetzt, wie in Zusammenhang mit Fig. 3 erläutert, können einfach aufgebaute pneumatische Steuerkomponenten verwendet werden, um schneller wirkende hydraulische Radbremskomponenten zu steuern. Gleichzeitig kann auf die Verwendung teurer und raumgreifend aufgebauter pneumatischhydraulischer Druckumsetzer, wie sie aus herkömmlichen AoH-Anlagen bekannt sind, verzichtet werden.

### Bezugszeichenliste

- 1: Ventilbaueinheit
- 2: Ventilgehäuse
- 3: Gehäusehälfte
- 3a: Stirnkante
- 3b: Schraubbolzen
- 4: Gehäusehälfte
- 4a: Stirnkante
- 4b: Schraubbolzen
- 5: Pneumatischer Teil
- 6: Hydraulischer Teil
- 7: Hydraulischer Eingang
- 8: Hydraulischer Ausgang
- 9: Hydraulischer Rücklauf
- 10: Druckluftanschluss
- 11: Zylinderbohrung
- 12: Steuerkolben
- 13: Stößel
- 14: Erster Federteller
- 15: Zylinderbohrung
- 16: Rand
- 17: Ende
- 18: Schraubendruckfeder
- 19: Ende
- 20: Rand
- 21: Zweiter Federteller
- 22: Tellerboden
- 23: Kugel
- 24: Schieber
- 25: Bohrung
- 26: Ausnehmung
- 27: Dichtung
- 28: Schraube
- 29: Stirnfläche
- 30: Druckfeder
- 31: Bremsanlage
- 32: Zugmaschine
- 33: Vorderrad
- 34: Vorderrad
- 35: Hinterrad
- 36: Hinterrad
- 37: Bremszylinder
- 38: Bremszylinder
- 39: Bremszylinder
- 40: Bremszylinder
- 41: Hydraulikspeicher
- 42: Hydraulikspeicher
- 43: Druckluftbehälter
- 44: Druckluftbehälter
- 45: Bremswertgeber
- 46: Zweikreis-Fußbremsventil
- 47: Steuergerät
- 48: Raddrehzahlsensor
- 49: Drucksensor
- 50: 3/2-Wegeventil
- 51: Doppelrückschlagventil
- 52: ABS-Ventil
- 53: Lenkwinkelsensor

- I: erster Bremskreis
- II: zweiter Bremskreis

## Patentansprüche

1. Ventilbaueinheit (1) für eine Bremsanlage (31) eines Kraftfahrzeuges, mit Anschlüssen (7; 8; 9; 10) für wenigstens zwei unterschiedliche Druckmedien, nämlich Druckluft und hydraulisches Fluid, wobei ein Druckmedium als Steuermedium und das andere Druckmedium als Arbeitsmedium eingesetzt ist, wobei das Steuermedium ein Ventil (24) für das Arbeitsmedium wenigstens in eine offene oder in eine geschlossene Stellung schaltet, wobei die Ventilbaueinheit (1) ein Ventilgehäuse (2) mit zwei Gehäusehälften (3, 4) aufweist, welche die Ventilbaueinheit (1) in einen pneumatischen Teil (5) und in einen hydraulischen Teil (6) unterteilen, wobei die Gehäusehälften (3, 4) mit Stirnkanten (3a, 4a) aneinander anliegen und wobei der pneumatische Teil (5) als Steuerkammer und der hydraulische Teil (6) als Arbeitskammer ausgebildet ist, wobei ein als Schieber (24) ausgebildetes Ventil im hydraulischen Teil (6) angeordnet ist, welcher mittels eines im pneumatischen Teil (5) angeordneten, über einen Druckluftanschluss (10) mit Druckluft beaufschlagbaren Steuerkolben (12) betätigbar ist, wobei durch Betätigung des Schiebers (24) wenigstens ein hydraulischer Eingang (7) mit einem hydraulischen Ausgang (8) verbindbar ist, **dadurch gekennzeichnet, dass** der Steuerkolben (12) den auf ihn wirkenden Druck über einen Stößel (13) auf einen ersten Federteller (14) überträgt, wobei der erste Federteller (14) in einer axialen Zylinderbohrung (15) der Gehäusehälfte (4) des hydraulischen Teils (6) der Ventilbaueinheit (1) angeordnet ist, wobei sich der erste Federteller (14) mit einem Rand (16) gegen ein zum pneumatischen Teil (5) gewandtes Ende (17) einer Schraubendruckfeder (18) abstützt, wobei sich ein zu den hydraulischen Anschlüssen (7 - 9) hin gewandtes Ende (19) der Schraubendruckfeder (18) gegen einen Rand (20) eines zweiten Federtellers (21) abstützt, welcher an dem Schieber (24) anliegt.

2. Ventilbaueinheit nach Anspruch 1, **dadurch gekennzeichnet, dass** der auf den Steuerkolben (12) des pneumatischen Teils (5) wirkende Steuerdruck zwischen 8,5 und 12,5, vorzugsweise 10 bar beträgt und dass der am hydraulischen Eingang (7) des hydraulischen Teils (6) anliegende hydraulische Druck zwischen 85 und 125 bar, vorzugsweise 100 bar beträgt, wobei die Druckübersetzung ein Verhältnis von 10 : 1 aufweist.

3. Ventilbaueinheit nach Anspruch 1, **dadurch gekennzeichnet, dass** der Schieber (24) längsverschieblich in einer zylindrischen Bohrung (25) in der Gehäusehälfte (4) des hydraulischen Teils (6) angeordnet ist, wobei der Durchmesser der Bohrung (25) durchmesserkleiner als die Zylinderbohrungen (11, 15) der Gehäusehälften (3, 4) ist.

4. Ventilbaueinheit nach Anspruch 3, **dadurch gekennzeichnet, dass** das Verhältnis des Durchmessers des Schiebers (24) zum Durchmesser des Steuerkolbens (12) etwa 1:3 beträgt.

5. Bremsanlage (31) für eine landwirtschaftliche Zugmaschine (32), mit einer Ventilbaueinheit nach wenigstens einem der Ansprüche 1 - 4, **dadurch gekennzeichnet, dass** die Bremsanlage (31) nehmerseitig hydraulisch und steuerseitig pneumatisch ausgebildet ist.

6. Bremsanlage nach Anspruch 5, **dadurch gekennzeichnet, dass** Räder (33 - 36) der Zugmaschine (32) jeweils Bremsen aufweisen, welche durch jeweils einen hydraulischen Bremszylinder (37 - 40) betätigbar sind, wobei die Bremszylinder (37 - 40) an wenigstens einem Hydraulikspeicher (41; 42) angeschlossen sind, wobei zwischen dem wenigstens einen Hydraulikspeicher (41; 42) und den hydraulischen Bremszylindern (37 - 40) jeweils eine Ventilbaueinheit (1) angeordnet ist.

7. Bremsanlage nach Anspruch 5 oder 6, **dadurch gekennzeichnet, dass** die Bremsanlage (31) steuerseitig wenigstens einen Druckluftbehälter (43; 44) aufweist, aus welchen Druckluft jeweils in den Druckluftanschluss (10) der Ventilbaueinheit (1) einspeisbar ist, wobei zwischen dem wenigstens einen Druckluftbehälter (43; 44) und jeweils einer Ventilbaueinheit (1) ein Bremswertgeber (45) in Form eines Fußbremsventils (46) angeordnet ist.

8. Bremsanlage nach wenigstens einem der Ansprüche 5 - 7, **dadurch gekennzeichnet, dass** die Bremsanlage (31) steuerseitig Komponenten einer pneumatischen ABS-Bremsanlage, insbesondere pneumatische ABS-Ventile (52), aufweist, welche zwischen Bremswertgeber (45) und jeweils einer Ventilbaueinheit (1) angeordnet sind.

9. Bremsanlage nach Anspruch 8, **dadurch gekennzeichnet, dass** die ABS-Bremsanlage elektronisch durch ein elektronisches Steuergerät (47) gesteuert ist, wobei wenigstens elektrische Drehzahlsensoren (48) zur Erfassung von Drehzahlen der Räder (33 - 36) an diesen angeordnet und elektrisch mit dem Steuergerät (47) verbunden sind.

10. Bremsanlage nach Anspruch 9, **dadurch gekennzeichnet, dass** zwischen dem wenigstens einen Druckluftbehälter (43; 44) und wenigstens einem ABS-Ventil (52) ein durch das Steuergerät (47) elektronisch gesteuertes 3/2-Wegeventil (50) angeordnet ist.

11. Bremsanlage nach Anspruch 10, **dadurch gekennzeichnet, dass** das 3/2-Wegeventil (50) eine autonome Lenkbremsfunktion ermöglicht.

12. Bremsanlage nach Anspruch 11, **dadurch gekennzeichnet, dass** das 3/2-Wegeventil (50) bei Vorliegen eines vom elektronischen Steuergeräts (47) erkannten Lenkbremswunsch aufgrund von durch die Drehzahlsensoren (48) und durch einen Lenkradwinkelsensor (53) gewonnenen Daten über Fahrzeuggeschwindigkeit und Lenkradeinschlag derart schaltbar ist, dass ein achsweises, einseitiges Bremsen von Rädern (33, 35; 34, 36) erfolgt oder unterdrückt ist.

## Claims

1. Valve component (1) for a brake system (31) of a motor vehicle, having connections (7; 8; 9; 10) for at least two different pressure media, specifically compressed air and hydraulic fluid, wherein one pressure medium is used as a control medium and the other pressure medium is used as a working medium, wherein the control medium switches the valve (24) for the working medium at least into an open position or into a closed position, wherein the valve component (1) has a valve housing (2) with two housings halves (3, 4) which divide the valve component (1) into a pneumatic part (5) and into a hydraulic part (6), wherein the housing halves (3, 4) bear one against the other with end edges (3a, 4a), and wherein the pneumatic part (5) is embodied as a control chamber, and the hydraulic part (6) is embodied as a working chamber, wherein a valve which is embodied as a slide (24) is arranged in the hydraulic part (6), which slide (24) can be activated by means of a control piston (12) which is arranged in the pneumatic part (5) and to which compressed air can be applied via a compressed air connection (10), wherein at least one hydraulic inlet (7) can be connected to a hydraulic outlet (8) by activating the slide (24), **characterized in that** the control piston (12) transmits the pressure acting on it to a first spring plate (14) via a plunger (13), wherein the first spring plate (14) is arranged in an axial cylinder bore (15) of the housing half (4) of the hydraulic part (6) of the valve component (1), wherein the first spring plate (14) is supported with one edge (16) against an end (17) of a helical compression spring (18) facing the pneumatic part (5), wherein an end (19) of the helical compression spring (18) which faces the hydraulic connections (7-9) is supported against an edge (20) of a second spring plate (21) which bears on the slide (24).

2. Valve component according to Claim 1, **characterized in that** the control pressure acting on the control piston (12) of the pneumatic part (5) is between 8.5 and 12.5 bar, and is preferably 10 bar, and **in that** the hydraulic pressure prevailing at the hydraulic inlet (7) of the hydraulic part (6) is between 85 and 125 bar, and is preferably 100 bar, wherein the pressure transmission has a ratio of 10:1.

3. Valve component according to Claim 1, **characterized in that** the slide (24) is arranged in a longitudinally sliding fashion in a cylindrical bore (25) in the housing half (4) of the hydraulic part (6), wherein the diameter of the bore (25) is smaller than the diameters of the cylinder bores (11, 15) of the housing halves (3, 4) .

4. Valve component according to Claim 3, **characterized in that** the ratio of the diameter of the slide (24) to the diameter of the control piston (12) is approximately 1:3.

5. Brake system (31) for an agricultural tractor machine (32), having a valve component according to at least one of Claims 1-4, **characterized in that** the brake system (31) is embodied hydraulically on the slave side and pneumatically on the control side.

6. Brake system according to Claim 5, **characterized in that** wheels (33-36) of the tractor machine (32) each have brakes which can be activated by means of in each case one hydraulic brake cylinder (37-40), wherein the brake cylinders (37-40) are connected to at least one hydraulic accumulator (41; 42), wherein in each case one valve component (1) is arranged between the at least one hydraulic accumulator (41; 42) and the hydraulic brake cylinders (37-40).

7. Brake system according to Claim 5 or 6, **characterized in that** the brake system (31) has on the control side at least one compressed air container (43; 44) from which compressed air can be respectively fed into the compressed air connection (10) of the valve component (1), wherein a brake value generator (45) in the form of a foot brake valve (46) is arranged between the at least one compressed air container (43; 44) and in each case one valve component (1).

8. Brake system according to at least one of Claims 5 - 7, **characterized in that** the brake system (31) has on the control side components of a pneumatic ABS brake system, in particular pneumatic ABS valves (52) which are arranged between the brake value generator (45) and in each case one valve component (1).

9. Brake system according to Claim 8, **characterized in that** the ABS brake system is controlled electronically by an electronic control unit (47), wherein at least electrical rotational speed sensors (48) for sensing rotational speeds of the wheels (33-36) are arranged thereon and connected electrically to the control unit (47).

10. Brake system according to Claim 9, **characterized in that** a 3/2-way valve (50) which is controlled electronically by the control unit (47) is arranged between the at least one compressed air container (43; 44) and at least one ABS valve (52) .

11. Brake system according to Claim 10, **characterized in that** the 3/2-way valve (50) permits an autonomous steering brake function.

12. Brake system according to Claim 11, **characterized in that** when a steering braking request which is detected by the electronic control unit (47) is present, the 3/2-way valve (50) can be switched, on the basis of data relating to the vehicle speed and the steering lock which are acquired by the rotational speed sensors (48) and by a steering wheel angle sensor (53), in such a way that axle-wise, one-sided braking of wheels (33, 35; 34, 36) takes place or is suppressed.

## Revendications

1. Ensemble de soupape (1) pour une installation de freinage (31) d'un véhicule automobile, comprenant des raccords (7 ; 8 ; 9 ; 10) pour au moins deux milieux sous pression différents, à savoir de l'air sous pression et du fluide hydraulique, un milieu sous pression étant utilisé en tant que milieu de commande et l'autre milieu sous pression étant utilisé en tant que milieu de travail, le milieu de commande commutant une soupape (24) pour le milieu de travail au moins dans une position ouverte ou dans une position fermée, l'ensemble de soupape (1) présentant un boîtier de soupape (2) avec deux moitiés de boîtier (3, 4) qui divisent l'ensemble de soupape (1) en une partie pneumatique (5) et une partie hydraulique (6), les moitiés de boîtier (3, 4) s'appliquant l'une contre l'autre avec des arêtes frontales (3a, 4a) et la partie pneumatique (5) étant réalisée sous forme de chambre de commande et la partie hydraulique (6) étant réalisée sous forme de chambre de travail, une soupape réalisée sous forme de coulisseau (24) étant disposée dans la partie hydraulique (6) qui peut être actionnée au moyen d'un piston de commande (12) disposé dans la partie pneumatique (5), pouvant être sollicité avec de l'air sous pression par le biais d'un raccord d'air sous pression (10), au moins une entrée hydraulique (7) pouvant être connectée à une sortie hydraulique (8) par sollicitation du coulisseau (24), **caractérisé en ce que** le piston de commande (12) transmet la pression agissant sur lui par le biais d'un poussoir (13) à une première coupelle de ressort (14), la première coupelle de ressort (14) étant disposée dans un alésage cylindrique axial (15) de la moitié de boîtier (4) de la partie hydraulique (6) de l'ensemble de soupape (1), la première coupelle de ressort (14) s'appuyant avec un bord (16) contre une extrémité (17) d'un ressort de compression hélicoïdal (18) tournée vers la partie pneumatique (5), une extrémité (19) du ressort de compression hélicoïdal (18) tournée vers les raccords hydrauliques (7-9) s'appuyant contre un bord (20) d'une deuxième coupelle de ressort (21) qui s'applique contre le coulisseau (24).

2. Ensemble de soupape selon la revendication 1, **caractérisé en ce que** la pression de commande agissant sur le piston de commande (12) de la partie pneumatique (5) est comprise entre 8,5 et 12,5, de préférence vaut 10 bars, et **en ce que** la pression hydraulique s'appliquant au niveau de l'entrée hydraulique (7) de la partie hydraulique (6) est comprise entre 85 et 125 bars, de préférence vaut 100 bars, le rapport de pression présentant un rapport de 10:1.

3. Ensemble de soupape selon la revendication 1, **caractérisé en ce que** le coulisseau (24) est disposé de manière déplaçable longitudinalement dans un alésage cylindrique (25) dans la moitié de boîtier (4) de la partie hydraulique (6), le diamètre de l'alésage (25) étant plus petit que le diamètre des alésages cylindriques (11, 15) des moitiés de boîtier (3, 4).

4. Ensemble de soupape selon la revendication 3, **caractérisé en ce que** le rapport du diamètre du coulisseau (24) au diamètre du piston de commande (12) vaut environ 1:3.

5. Installation de freinage (31) pour un tracteur agricole (32), comprenant un ensemble de soupape selon au moins l'une quelconque des revendications 1 à 4, **caractérisée en ce que** l'installation de freinage (31) est réalisée hydrauliquement du côté récepteur et pneumatiquement du côté commande.

6. Installation de freinage selon la revendication 5, **caractérisée en ce que** des roues (33-36) du tracteur (32) présentent à chaque fois des freins qui peuvent être actionnés à chaque fois par un cylindre de frein hydraulique (37-40), les cylindres de frein (37-40) étant raccordés à au moins un accumulateur hydraulique (41 ; 42), entre l'au moins un accumulateur hydraulique (41 ; 42) et les cylindres de frein hydrauliques (37-40) étant à chaque fois disposé un ensemble de soupape (1).

7. Installation de freinage selon la revendication 5 ou 6, **caractérisée en ce que** l'installation de freinage (31) présente, du côté commande, au moins un récipient d'air sous pression (43 ; 44), à partir duquel de l'air sous pression peut être à chaque fois introduit dans le raccord d'air sous pression (10) de l'ensemble de soupape (1), un capteur de valeur de freinage (45) étant disposé entre l'au moins un récipient d'air sous pression (43 ; 44) et à chaque fois un ensemble de soupape (1), sous la forme d'une soupape de freinage actionnée au pied (46).

8. Installation de freinage selon au moins l'une quelconque des revendications 5 à 7, **caractérisée en ce que** l'installation de freinage (31) présente, du côté commande, des composants d'une installation de freinage ABS pneumatique, en particulier des soupapes ABS pneumatiques (52) qui sont disposées entre des capteurs de valeur de freinage (45) et un ensemble de soupape (1) respectif.

9. Installation de freinage selon la revendication 8, **caractérisée en ce que** l'installation de freinage ABS est commandée électroniquement par un appareil de commande électronique (47), au moins des capteurs de vitesse de rotation électriques (48) étant disposés pour la détection de vitesses de rotation des roues (33-36) sur ces dernières et étant connectés électriquement à l'appareil de commande (47).

10. Installation de freinage selon la revendication 9, **caractérisée en ce qu'**entre l'au moins un récipient d'air sous pression (43 ; 44) et au moins une soupape ABS (52) est disposée une soupape à 3/2 voies (50) commandée électroniquement par l'appareil de commande (47).

11. Installation de freinage selon la revendication 10, **caractérisée en ce que** la soupape à 3/2 voies (50) permet une fonction de frein de direction autonome.

12. Installation de freinage selon la revendication 11, **caractérisée en ce que** la soupape à 3/2 voies (50), en présence d'un souhait de frein de direction détecté par l'appareil de commande électronique (47), sur la base de données obtenues par les capteurs de vitesse de rotation (48) et par un capteur d'angle de volant de direction (53), concernant la vitesse du véhicule et le braquage du volant de direction, peut être commutée de telle sorte qu'un freinage d'un seul côté, rapporté aux essieux, des roues (33, 35 ; 34, 36) se produise ou soit supprimé.
